Europäisches Patentamt

European Patent Office

Office européen des brevets

(11) Numéro de publication: **0 187 796 B1**

# FASCICULE DE BREVET EUROPEEN

(45) Date de publication de fascicule du brevet:
**18.12.91**

(21) Numéro de dépôt: **85903303.7**

(22) Date de dépôt: **04.07.85**

(86) Numéro de dépôt internationale :
**PCT/FR85/00188**

(87) Numéro de publication internationale :
**WO 86/00625 (30.01.86 86/03)**

(51) Int. Cl.5: **C08F 10/00, C08F 4/62,**
**C08F 4/68, C08F 4/70**

(54) **CATALYSEUR DE POLYMERISATION ET SON PROCEDE DE FABRICATION.**

(30) Priorité: **05.07.84 FR 8410670**

(43) Date de publication de la demande:
**23.07.86 Bulletin 86/30**

(45) Mention de la délivrance du brevet:
**18.12.91 Bulletin 91/51**

(84) Etats contractants désignés:
**AT BE CH DE FR GB IT LI LU NL SE**

(56) Documents cités:
**DE-A- 2 130 241**
**US-A- 4 439 538**

**CHEMICAL ABSTRACTS, vol. 84, no. 10, 08**
**Mar 1976, Columbus, OH (US); p. 19, no.**
**60245c**

**CHEMICAL ABSTRACTS, vol. 76, no. 26, 26**
**Jun 1972, Columbus, OH (US); p. 25, no.**
**154484s**

(73) Titulaire: **SOFRAPO-COMMERCIALE**
**11 rue de l'Abreuvoir**
**F-92411 Courbevoie(FR)**

(72) Inventeur: **BUJADOUX, Karel**
**31, avenue Van Pelt**
**F-62300 Lens(FR)**

## Description

La présente invention concerne un catalyseur de polymérisation de l'éthylène ou de copolymérisation de l'éthylène et des α-oléfines ainsi qu'un procédé de fabrication dudit catalyseur et un procédé utilisant ledit catalyseur.

Il est connu par la demande de brevet japonais n° 74/46.883 de polymériser l'éthylène à 90°C sous 10 bars en présence de tri-isobutylaluminium et d'un mélange des complexes de $TiCl_4$ et de $VCl_3$ avec le tétrahydrofuranne. D'autre part le brevet américain n° 4.439.538 décrit un système catalytique pour la polymérisation des oléfines comprenant : (a) un composé organométallique des groupes I à III et (b) un composant contenant du titane et obtenu par les étapes suivantes : traitement d'un support de chlorure ferreux anhydre par au moins un donneur d'électrons de type organique pour former un adduct, broyage du chlorure ferreux et post-traitement de l'adduct de chlorure ferreux broyé par un composé halogéné de titane à l'état liquide. Le rapport en poids du donneur d'électrons (de préférence le benzoate d'éthyle) au chlorure ferreux est compris entre 10 % et 200 % et le traitement est effectué à une température de 10° à 50°C. Le rapport en poids du composé halogéné de titane à l'adduct de chlorure ferreux broyé peyt être compris entre 0,5 et 500. Tous les exemples se rapportent à la polymérisation du propylène.

La présente invention a pour premier objet un catalyseur et un système catalytique adaptés à la polymérisation de l'éthylène ou à la copolymérisation de l'éthylène et des α-oléfines à haute température et sous des pressions élevées. Le catalyseur selon l'invention est constitué de:

(A) un mélange d'au moins un chlorure d'un métal de transition M choisi parmi le fer, le vanadium et le chrome et d'au moins un donneur d'électrons, dans des proportions respectives telles que ledit chlorure soit soluble dans ledit donneur d'électrons, et

(B) un composé de titane ou vanadium à l'état liquide,

le rapport molaire du métal M au composé (B) étant compris entre 0,3 et 6.

Le système catalytique selon l'invention comprend, en suspension dans au moins un hydrocarbure (cyclo)aliphatique saturé ou aromatique (ayant de préférence de 6 à 12 atomes de carbone), (C) au moins un composé organoaluminique comprenant au moins un monochlorodialkylaluminium et est caractérisé en ce qu'il comprend au moins un catalyseur tel que décrit précédemment, le rapport molaire du composé (C) au donneur d'électrons étant supérieur ou égal à 1,5.

Le composé (A), qui est dépourvu de composé organoaluminique mais qui comprend un composé d'un métal de transition M choisi parmi le fer, le vanadium et le chrome est obtenu par contact (i) d'au moins un donneur d'électrons choisi parmi les alcools n'ayant de préférence pas moins de 6 atomes de carbone, les acides organocarboxyliques n ayant de préférence pas moins de 7 atomes de carbone, les aldéhydes n'ayant de préférence pas moins de 7 atomes de carbone et les amines, de préférence des alcoylamines n'ayant pas moins de 6 atomes de carbone, avec (ii) au moins un chlorure de métal M. Par chlorure de métal M on entend d'une part le groupe des chlorures comprenant $FeCl_2$, $FeCl_3$, $VCl_3$ et $CrCl_3$ et d'autre part des composés contenant au moins un atome de chlore et ayant des groupes organiques autres que des groupes hydrocarbures, par exemple des groupes alcoxy $C_2$-$C_{10}$ comme des groupes méthoxy, éthoxy, propoxy, butoxy et octoxy, des groupes aryloxy $C_6$-$C_{20}$ comme les groupes phénoxy, méthylphénoxy, 2,6-diméthylphénoxy et naphtoxy, des groupes acyloxy $C_1$-$C_{20}$ comme les groupes formyloxy (HCOO-), acétoxy ($CH_3$COO-), propionyloxy ($C_2H_5$COO-), butyryloxy ($C_3H_7$COO-), valéryloxy ($C_4H_9$COO-), stéaroyloxy ($C_{17}H_{33}$COO-) et oléoxyloxy ($C_{17}H_{31}$COO-). Des quantités mineures de chlorure de ruthénium $RuCl_3$, par exemple inférieures ou égales à 1 % molaire par rapport au chlorure de métal M, sont ajoutées à ce dernier.

On peut citer, comme exemples spécifiques des alcools comme donneur d'électrons (i), des alcools aliphatiques comme le 2-éthylbutanol, le n-heptanol, le n-octanol, le 2-éthylhexanol, le décanol, le dodécanol, l'alcool tétradécylique, l'undécénol, l'alcool oléylique et l'alcool stéarylique ; des alcools alicycliques comme le cyclohexanol et le méthylcyclohexanol ; des alcools aromatiques comme l'alcool benzylique, l'alcool méthylbenzylique, l'alcool isopropylbenzylique, l'alcool α-méthylbenzylique et l'alcool α,α-diméthylbenzylique ; et des alcools aliphatiques contenant un groupe alcoxy comme le n-butyl cellosolve et le 1-butoxy-2-propanol. Des alcools ayant moins de 6 atomes de carbone comme le méthanol, l'éthanol, le propanol, le butanol, l'éthylène glycol et le méthyl carbitol peuvent également être utilisés comme alcools.

On peut citer, comme exemples d'acides organocarboxyliques appropriés comme donneur d'électrons (i), l'acide caprylique, l'acide 2-éthylhexanoïque, l'acide undécylénique, l'acide undécanoïque, l'acide nonylique et l'acide octanoïque.

On peut citer comme exemples d'aldéhydes appropriés comme donneur d'électrons (i), le caprylaldéhyde, le 2-éthylhexylaldéhyde, le capraldéhyde et l'aldéhyde undécylique.

On peut citer comme exemples d'amines appropriées comme donneur d'électrons (i), l'heptylamine, l'octylamine, la nonylamine, la décylamine, la laurylamine, l'undécylamine et la 2-éthylhexylamine.

Comme exemples de composés (B) on peut citer des composés de titane tétravalent ayant pour formule Ti(OR)$_n$X$_{4-n}$, où R est un groupe hydrocarbure, X est un atome d'halogène, et $0 \leq n \leq 4$. R représente, par exemple, un groupe alcoyle saturé ou insaturé de 1 à 20 atomes de carbone, pouvant éventuellement être substitué par un atome d'halogène, un groupe alcoxy inférieur, etc.

On peut citer, comme exemples spécifiques des composés de titane : TiCl$_4$, TiBr$_4$, TiI$_4$, Ti(OCH$_3$)Cl$_3$, Ti(OC$_2$H$_5$)Cl$_3$, Ti(OC$_4$H$_9$)Cl$_3$, Ti(OC$_6$H$_5$)Cl$_3$, Ti(OC$_2$H$_5$)$_2$Cl$_2$, Ti(OC$_3$H$_7$)$_2$Cl$_2$, Ti(OC$_4$H$_9$)$_2$Cl$_2$, Ti(OC$_2$H$_5$)$_3$Cl, Ti(OC$_6$H$_5$)$_3$Cl, Ti(OC$_4$H$_9$)$_3$Cl, Ti(OC$_2$H$_5$)$_4$, Ti(OC$_3$H$_7$)$_4$, Ti(OC$_4$H$_9$)$_4$, Ti(OC$_6$H$_{13}$)$_4$, Ti(OC$_6$H$_{11}$)$_4$, Ti(OC$_8$H$_{17}$)$_4$, Ti[OCH$_2$(C$_2$H$_5$)CHC$_4$H$_9$]$_4$, Ti(OC$_9$H$_{19}$)$_4$, Ti[OC$_6$H$_3$(CH$_3$)$_2$]$_4$, Ti(OCH$_3$)$_2$(OC$_4$H$_9$)$_2$, Ti(OC$_2$H$_4$Cl)$_4$ et Ti(OC$_2$H$_4$OCH$_3$)4. On peut également citer le trichlorure de titane (éventuellement co-cristallisé avec le trichlorure d'aluminium sous la forme TiCl$_3$, 1/3 AlCl$_3$) et le dichlorure de titane après les avoir traités pour les rendre utilisables sous forme liquide. Ce traitement peut être effectué par exemple en mettant ledit chlorure de titane en contact avec le même donneur d'électrons (i) que celui utilisé pour la préparation du composé (A), à une température comprise entre 70° et 300°C et pendant une durée supérieure ou égale à 15 minutes. Lorsque ce traitement ne provoque qu'une dissolution partielle du chlorure de titane, il est préférable de séparer et de n'utiliser que la partie solubilisée du composé de titane.

Comme exemples de composés (B) on peut également citer des composés de vanadium ayant pour formule VO(OR)$_m$X$_{3-m}$ où R et X sont tels que définis ci-dessus et $0 \leq m \leq 3$, ou VX$_4$ où X est tel que défini. On peut citer comme exemples spécifiques VOCl$_3$, VO(OC$_2$H$_5$)Cl, VO(OC$_2$H$_5$)$_3$, VO(OC$_2$H$_5$)$_{1,5}$Cl$_{1,5}$ VO(OC$_4$H$_9$)$_3$, VO[OCH$_2$(CH$_2$)CHC$_4$H$_9$]$_3$ et VCl$_4$.

De façon caractéristique, le composé (C) comprend au moins un monochlorodialkylaluminium de formule AlClRR' dans laquelle R et R', identiques ou différents, représentent un groupe alkyle ayant de 1 à 12 atomes de carbone. Le composé (C) peut comprendre en outre, en mélange avec ledit monochlorodialkylaluminium, un autre composé organoaluminique choisi parmi les trialkylaluminiums, les trialkénylaluminiums, les alcoolates de dialkylaluminium, les sesquialcoolates d'alkylaluminium, les dichloromonoalkyl-aluminiums, les hydrures de dialkylaluminium, les dihydrures d'alkylaluminium, les alkylsiloxalanes et les alcoxychlorures d'alkylaluminium. Lorsque l'autre composé organoaluminique compris dans le composé (C) est un trialkylaluminium, il est de préférence utilisé dans un rapport molaire, par rapport à la somme des métaux de transition présents en (A) et (B), inférieur ou égal à 5. Quoique moins répandus que les composés chlorés correspondants, les composés halogénés d'organoaluminium dans lesquels l'halogène est autre que le chlore pourront aussi entrer dans la constitution du composé (C). De préférence le monochlorodialkylaluminium est le constituant principal du composé (C), dont il représente au moins la moitié en proportion molaire ; ainsi les sesquichlorures d'aluminium entrent dans le cadre des composés (C) selon l'invention.

Un second objet de la présente invention consiste en un procédé de polymérisation de l'éthylène ou de copolymérisation de l'éthylène avec au moins une α-oléfine, sous une pression comprise entre 1 et 2 500 bars, à une température comprise entre 70° et 320°C, en présence du système catalytique décrit précédemment. Ainsi défini, le procédé selon l'invention recouvre essentiellement deux possibilités d'utilisation dudit système catalytique.

- selon une première variante, dans laquelle la pression est choisie entre 1 et 50 bars et la température est choisie entre 70° et 200°C, la polymérisation ou copolymérisation est effectuée en présence d'au moins un solvant choisi parmi les hydrocarbures aliphatiques, alicycliques, aromatiques et leurs dérivés halogénés. Comme exemples de tels solvants on peut citer le pentane, l'hexane, l'heptane, l'octane, le décane, l'undécane, le dodécane, le kérosène, le cyclohexane, le méthylcyclopentane, le méthylcyclohexane, le benzène, le toluène, les xylènes et le chlorobenzène. Dans cette variante du procédé selon l'invention, la durée de la polymérisation est généralement comprise entre 30 minutes et plusieurs heures selon la température considérée.

- selon une seconde variante, dans laquelle la pression est choisie entre 100 et 2500 bars et la température est choisie entre 170° et 320°C, la (co)polymérisation est effectuée en continu et en l'absence de solvant. Un diluant tel que le butane peut toutefois être présent en quantité modéréenotamment lorsque la pression dépasse 1000 bars. Dans cette variante du procédé selon l'invention, le temps de séjour du système catalytique dans le réacteur de (co)polymérisation est compris entre 2 et 120 secondes selon la température considérée.

Dans les deux variantes, le procédé selon l'invention peut être mis en oeuvre en présence d'hydrogène agissant comme agent de transfert afin de contrôler le poids moléculaire du polymère ou copolymère formé. Il peut également être mis en oeuvre en injectant dans le réacteur, le cas échéant séparément du système catalytique décrit précédemment, un trialkylaluminium en solution dans un hydrocarbure saturé ou un mélange de tels hydrocarbures. Dans le cas du procédé sous haute pression, la polymérisation peut être effectuée, au choix, dans un réacteur autoclave comprenant une ou plusieurs zones réactionnelles ou bien dans un réacteur tubulaire.

Un troisième objet de la présente invention consiste en un procédé de fabrication du catalyseur décrit précédemment, caractérisé en ce que:
- dans une première étape on fait réagir le donneur d'électrons et le chlorure de métal M, à une température comprise entre 70° et 200° C et pendant une durée comprise entre 2 et 400 minutes pour former un composé soluble (A), et
- dans une seconde étape on mélange le composé soluble (A) avec le composé (B) à une température inférieure ou égale à 120° C.

De préférence la fabrication du catalyseur est effectuée en utilisant, dans la première étape, le donneur d'électrons en une quantité molaire excessive et variable selon le type du donneur d'électrons et le type du chlorure de métal M. L'hydrocarbure solvant utilisé dans cette première étape peut être choisi parmi les hydrocarbures aliphatiques, alicycliques, aromatiques et leurs dérivés halogénés.

Les exemples suivants sont donnés à titre illustratif et non limitatif de la présente invention.

EXEMPLE 1

A 3,3 g de chlorure ferreux (contenant des traces de chlorure de ruthénium RuCl₃ à raison d'environ 0,1 % en poids) on ajoute sous atmosphère d'azote 38 ml d'éthyl-2 hexanol. Tout en agitant, le mélange est chauffé graduellement jusqu'à la température de 150° C jusqu'à obtenir une solution, de couleur marron clair, de complexe chlorure ferreux/éthyl-2 hexanol (composé A).

Un réacteur de volume 1 litre est alors rempli successivement de 600 ml d'une coupe C₁₀-C₁₂ d'hydrocarbures aliphatiques déshydratée et purifiée, de 0,1 millimole de titanate de n-butyle et d'une fraction (contenant 0,6 millimole de chlorure ferreux) de la solution préparée précédemment.

Tout en agitant, on laisse réagir ce mélange pendant 15 minutes à 80° C. On introduit alors dans le réacteur 10 millimoles de monochlorure de diéthylaluminium puis on laisse à nouveau réagir pendant 15 minutes à 80° C.

La polymérisation de l'éthylène est alors effectuée à la température de 80° C et sous une pression absolue de 1,1 bar. Le rendement catalytique mesuré est égal à 18 500 grammes de polymère par gramme de titane et par heure.

La polymérisation de l'éthylène étant ensuite effectuée dans les mêmes conditions qu'à l'exemple 1, le rendement catalytique mesuré est égal à 1080 grammes de polymère par gramme de titane et vanadium et par heure.

La polymérisation de l'éthylène étant ensuite effectuée dans les mêmes conditions qu'à l'exemple 1, le rendement catalytique mesuré est égal à 11.000 grammes de polymère par gramme de titane et par heure.

EXEMPLE 2

En utilisant le système catalytique préparé conformément à l'exemple 1, on effectue la polymérisation de de l'éthylène à la température de 200° C et sous une pression de 7 bars. Dans ces conditions on obtient, avec un rendement de 450 grammes par milliatome de titane, par minute et par mole.l⁻¹ d'éthylène, un polymère d'indice de fluidité (mesuré selon la norme ASTM D 1238-73) égal à 0,4 dg/min.

EXEMPLE 3

Dans 672 ml d'une coupe C₁₀-C₁₂ d'hydrocarbures aliphatiques déshydratée et purifiée, on introduit sous azote 65,2 millimoles de titanate de butyle et 95,5 ml d'une solution à 0,6 mole/l de chlorure de vanadium (contenant des traces de trichlorure de ruthénium à raison de 0,1 % en poids) dans l'éthyl-2 hexanol. Tout en agitant, on laisse réagir pendant 2 heures à 80° C, puis on refroidit jusqu'à 20° C. On ajoute ensuite lentement 1,225 mole de monochlorodiéthylaluminium, en solution à 1 mole par litre dans la même coupe d'hydrocarbures, puis on laisse réagir pendant 60 minutes à 25° C.

En utilisant le système catalytique ainsi préparé, on effectue la polymérisation de l'éthylène à la température de 200° C et sous une pression de 7 bars. On obtient, avec un rendement de 1080 grammes par milliatome de titane et vanadium, par minute et par mole.l⁻¹, un polymère d'indice de fluidité (mesuré selon la norme ASTM D 1238-73) égal à 1,1 dg/min.

EXEMPLE 4

On utilise le système catalytique préparé conformément à l'exemple 3 pour effectuer la polymérisation de l'éthylène dans les conditions dudit exemple en injectant en outre dans le réacteur du triéthylaluminium selon un rapport molaire AlEt₃/Ti+V égal à 4. On obtient le polymère avec un rendement de 1220 grammes par milliatome de titane et vanadium par minute et par mole.l⁻¹ d'éthylène.

EXEMPLE 5 (comparatif)

Le système catalytique est préparé dans les conditions de l'exemple 3 mis à part le fait que la réaction entre le titanate de butyle et le chlorure de vanadium est réalisée pendant 2 heures à 150°C.

Dans les conditions de polymérisation de l'exemple 7, le système catalytique ainsi obtenu conduit à un rendement de 380 grammes de polyéthylène par milliatome de titane et vanadium, par minute et par mole.$l^{-1}$ d'éthylène.

EXEMPLES 6 et 7

Les conditions de préparation du système catalytique de l'exemple 3 (rapport molaire V/Ti = 0,9) ont été reproduites en faisant varier le rapport molaire V/Ti. Dans les conditions de polymérisation de l'exemple 7, le polymère a été obtenu avec les rendements R suivants, exprimés en grammes par milliatome de titane et vanadium, par minute et par mole.$l^{-1}$ d'éthylène.
exemple 6 = V/Ti = 6 R = 1080
exemple 7 = V/Ti = 0,5 R = 1070

EXEMPLE 8

En utilisant le système catalytique préparé à l'exemple 3 on effectue, dans un réacteur autoclave de volume 0,9 litre, sous une pression de 800 bars et à la température de 240°C, la copolymérisation en régime continu d'un flux comprenant 65 % en poids d'éthylène et 35 % en poids de butène-1, en présence de 0,1 % en volume d'hydrogène comme agent de transfert. On obtient, avec un rendement catalytique de 6,3 kg par milliatome de titane et vanadium, un copolymère de masse volumique 0,935 $g/cm^3$ et d'indice de fluidité (mesuré selon la norme ASTM D 1238-73) égal à 2,6 dg/min.

EXEMPLE 9

On utilise le système catalytique préparé à l'exemple 3 pour effectuer, dans les conditions de l'exemple 8 et en injectant en outre dans le réacteur du triéthylaluminium selon un rapport molaire AlEt$_3$/Ti+V égal à 2, la copolymérisation de l'éthylène et du butène-1. On obtient, avec un rendement catalytique de 8,5 kg par milliatome de titane et vanadium, un copolymère d'indice de fluidité (mesuré selon la norme ASTM D 1238-73) égal à 1,2 dg/min.

EXEMPLE 10

On utilise le système catalytique préparé à l'exemple 3 pour copolymériser en régime continu dans les conditions de l'exemple 11 (aux exceptions suivantes près : température 260°C ; proportion d'hydrogène 0,03 % en volume) un flux comprenant 50 % en poids d'éthylène et 50 % en poids de butène-1. On obtient avec un rendement catalytique de 3,2 kg par milliatome de titane et vanadium, un copolymère d'indice de fluidité (mesuré selon la norme ASTM D 1238-73) égal à 1,6 dg/min.

**Revendications**

1. Catalyseur de polymérisation à base de composé de métal de transition, comprenant (B) un composé de titane ou vanadium à l'état liquide, caractérisé en ce qu'il comprend en outre :
(A) un mélange d'au moins un chlorure d'un métal de transition M choisi parmi le fer, le vanadium et le chrome, ledit chlorure comprenant une quantité inférieure ou égale à 1% molaire de chlorure de ruthénium $RuCl_3$, et d'au moins un donneur d'électrons choisi parmi les alcools n'ayant pas moins de 6 atomes de carbone, les acides organocarboxyliques n'ayant pas moins de 7 atomes de carbone, les aldéhydes n'ayant pas moins de 7 atomes de carbone et les amines n'ayant pas moins de 6 atomes de carbone, dans des proportions respectives telles que ledit chlorure soit soluble dans ledit donneur d'électrons,
en ce que le rapport molaire du métal M au composé (B) est compris entre 0,3 et 6, et en ce qu'il se présente à l'état liquide.

2. Catalyseur selon la revendication 1, caractérisé en ce que le composé (B) est un composé de titane tétravalent ayant pour formule Ti(OR)$_n$X$_{4-n}$, où R est un groupe hydrocarbure, X est un atome d'halogène, et $0 < n \leq 4$.

3. Catalyseur selon la revendication 1, caractérisé en ce que le composé (B) est un trichlorure ou dichlorure de titane traité, pour le rendre utilisable sous forme liquide, en mettant ledit chlorure de titane en contact avec le même donneur d'électrons que celui utilisé pour la préparation du composé (A), à une température comprise entre 70° et 300°C et pendant une durée supérieure ou égale à 15 minutes.

4. Catalyseur selon la revendication 1, caractérisé en ce que le composé (B) est un composé de vanadium de formule VX$_4$ ou VO(OR)$_m$X$_{3-m}$, où R est un groupe hydrocarbure, X est un atome d'halogène et $0 \leq m \leq 3$.

5. Procédé de fabrication d'un catalyseur selon l'une des revendications 1 à 4, caractérisé en ce que :
- dans une première étape on fait réagir le donneur d'électrons et le chlorure de métal M comprenant une quantité inférieure ou égale à 1% molaire de chlorure de ruthénium RuCl₃, à une température comprise entre 70° et 200°C et pendant une durée comprise entre 2 et 400 minutes pour former un composé soluble (A), et
- dans une seconde étape on mélange le composé soluble (A) avec le composé (B) à une température inférieure ou égale à 120°C.

6. Système catalytique de polymérisation, en suspension dans au moins un hydrocarbure (cyclo)aliphatique saturé ou aromatique, comprenant (C) au moins un composé organoaluminique comprenant au moins un monochlorodialkylaluminium, caractérisé en ce qu'il comprend en outre au moins un catalyseur selon l'une des revendications 1 à 4, le rapport molaire du composé (C) au donneur d'électrons étant supérieur ou égal à 1,5.

7. Procédé de polymérisation de l'éthylène ou de copolymérisation de l'éthylène avec au moins une α-oléfine, sous une pression comprise entre 1 et 2 500 bars, à une température comprise entre 70° et 320°C, en présence d'un système catalytique, caractérisé en ce que ledit système catalytique est conforme à la revendication 6.

8. Procédé de polymérisation selon la revendication 7, la pression étant choisie entre 1 et 50 bars et la température étant choisie entre 70° et 200°C, caractérisé en ce que la polymérisation ou copolymérisation est effectuée en présence d'au moins un solvant choisi parmi les hydrocarbures aliphatiques, alicycliques, aromatiques et leurs dérivés halogénés.

9. Procédé de polymérisation selon la revendication 7, la pression étant choisie entre 100 et 2500 bars et la température étant choisie entre 170° et 320°C, caractérisé en ce que le temps de séjour du système catalytique dans le réacteur de (co)polymérisation est compris entre 2 et 120 secondes selon la température considérée.

**Claims**

1. Polymerisation catalyst based ou a transition metal compound, comprising (B) a titanium or vanadium compound in the liquid state, characterised in that it additionally comprises:
(A) - a mixture of at least one chloride of a transition metal M chosen from iron, vanadium and chromium, said chloride comprising an amount less than or equal to 1% by mole of ruthenium chloride RuCl₃, and of at least one electron donor chosen from alcohols containing not fewer than 6 carbon atoms, organocarboxylic acids containing not fewer than 7 carbon atoms, aldehydes containing not fewer than 7 carbon atoms and amines containing not fewer than 6 carbons atoms, in such respective ratios that said chloride is soluble in said electron donor,
in that the molar ratio of the metal M to the compound (B) is between 0.3 and 6, and in that it is in the liquid state.

2. Catalyst according to claim 1, characterised in that the compound (B) is a compound of tetravalent titanium having the formula Ti(OR)ₙX₄₋ₙ, where R is a hydrocarbon group, X is a halogen atom, and 0 < n ≤ 4.

3. Catalyst according to claim 1, characterised in that the compound (B) is a titanium trichloride or dichloride treated, to make it usable in a liquid form, by placing the said titanium chloride in contact with the same electron donor as that employed for the preparation of the compound (A), at a temperature of between 70° and 300°C and for a period longer than or equal to 15 minutes.

4. Catalyst according to claim 1, characterised in that the compound (B) is a vanadium compound of formula VX4 or VO(OR)ₘX₃₋ₘ, where R is a hydrocarbon group, X is a halogen atom and 0 ≤ m ≤ 3.

5. Process for the manufacture of a catalyst according to one of claims 1 to 4, characterised in that
- in a first step the electron donor and the chloride of metal M comprising an amount less than or equal to 1% by mole of ruthenium chloride RuCl₃ are reacted at a temperature of between 70° and 200°C and for a period of between 2 and 400 minutes to form a soluble compound (A), and
- in a second step the soluble compound (A) is mixed with the compound (B) at a temperature below or equal to 120°C.

6. Polymerization catalyst system, in suspension in at least one saturated (cyclo)aliphatic or aromatic hydrocarbon, comprising (C) at least one organoaluminium compound comprising at least one monochlorodialkylaluminium, characterised in that it additionally comprises at least one catalyst according to one of claims 1 to 4, the molar ratio of the compound (C) to the electron donor being greater than or equal to 1.5.

7. Process for the polymerization of ethylene or the copolymerization of ethylene with at least one $\alpha$-olefine, at a pressure of between 1 and 2,500 bars, at a temperature of between 70° and 320° C, in the presence of a catalyst system, characterised in that the said catalyst system conforms to claim 6.

8. Polymerization process according to claim 7, the pressure being chosen between 1 and 50 bars and the temperature being chosen between 70° C and 200° C, characterised in that the polymerization or copolymerization is carried out in the presence of at least one solvent chosen from aliphatic, alicyclic or aromatic hydrocarbons and their halogenated derivatives.

9. Polymerization process according to claim 7, the pressure being chosen between 100 and 2,500 bars and the temperature being chosen between 170° and 320° C, charaterised in that the residence time of the catalyst system in the (co)polymerization reactor is between 2 and 120 seconds, depending on the temperature in question.

**Patentansprüche**

1. Polymerisationskatalysator auf Basis einer Übergangsmetallverbindung, enthaltend (B) eine Titan- oder Vanadiumverbindung in flüssigem Zustand, dadurch gekennzeichnet, daß er weiters enthält:
(A) eine Mischung aus mindestens einem Chlorid eines Übergangsmetalls M, das ausgewählt ist aus der Gruppe bestehend aus Eisen, Vanadium und Chrom, wobei das genannte Chlorid eine Menge von Weniger als oder gleich 1 Mol-% an Rutheniumchlorid $RuCl_3$ enthält, und mindestens einem Elektronen-Donator, der ausgewählt ist aus der Gruppe bestehend aus den Alkoholen mit nicht Weniger als 6 Kohlenstoffatomen, den Organokarbonsäuren mit nicht Weniger als 7 Kohlenstoffatomen, den Aldehyden mit nicht Weniger als 7 Kohlenstoffatomen und den Aminen mit nicht Weniger als 6 Kohlenstoffatomen, in solchen Verhältnissen zueinander, daß das genannte Chlorid in dem genannten Elektronen-Donator löslich ist, daß das Molverhältnis des Metalls M zur genannten Verbindung (B) zwischen 0,3 und 6 beträgt, und daß er im flüssigen Zustand vorliegt.

2. Katalysator nach Anspruch 1, dadurch gekennzeichnet, daß die Verbindung (B) eine vierwertige Titanverbindung mit der Formel $Ti(OR)_nX_{4-n}$ ist, in der R eine Kohlenwasserstoffgruppe, X ein Halogenatom und $0<n\leq4$ ist.

3. Katalysator nach Anspruch 1, dadurch gekennzeichnet, daß die Verbindung (B) ein Titantrichlorid oder -dichlorid ist, das, um dieses Titanchlorid in flüssiger Form einsetzbar zu machen, dadurch behandelt ist, daß es mit demselben Elektronen-Donator, wie er zur Herstellung der Verbindung (A) verwendet wird, bei einer Temperatur zwischen 70° und 300° C und für eine Dauer von mehr als oder gleich 15 Minuten in Kontakt gebracht wird.

4. Katalysator nach Anspruch 1, dadurch gekennzeichnet, daß die Verbindung (B) eine Vanadiumverbindung der Formel $VX_4$ oder $VO(OR)_mX_{3-m}$ ist, in der R eine Kohlenwasserstoffgruppe, X ein Halogenatom und $0\leq m\leq3$ ist.

5. Verfahren zur Herstellung eines Katalysators nach einem der Ansprüche 1 bis 4, dadurch gekennzeichnet, daß
- in einem ersten Schritt der Elektronen-Donator und das Chlorid des Metalls M, welches eine Menge von Weniger als oder gleich 1 Mol-% an Rutheniumchlorid $RuCl_3$ enthält, bei einer Temperatur zwischen 70° und 200° C und für eine Dauer zwischen 2 und 400 Minuten reagieren gelassen werden, um eine lösliche Verbindung (A) zu bilden, und
- in einem zweiten Schritt die lösliche Verbindung (A) mit der Verbindung (B) bei einer Temperatur von weniger als oder gleich 120° C gemischt wird.

6. Polymerisationskatalysatorsystem, in Suspension in mindestens einem (cyclo)aliphatischen gesättigten oder aromatischen Kohlenwasserstoff, enthaltend (C) mindestens eine Organoaluminium-Verbindung, die mindestens ein Monochlordialkylaluminium enthält, dadurch gekennzeichnet, daß es weiters mindestens einen Katalysator nach einem der Ansprüche 1 bis 4 enthält, wobei das Molverhältnis der Verbindung (C) zum Elektronen-Donator mehr als oder gleich 1,5 beträgt.

7. Verfahren zur Polymerisation von Ethylen oder zur Copolymerisation von Ethylen mit mindestens einem α-Olefin unter einem Druck zwischen 1 und 2500 bar, bei einer Temperatur zwischen 70° und 320° C und in Gegenwart eines Katalysatorsystems, dadurch gekennzeichnet, daß das genannte Katalysatorsystem ein solches nach Anspruch 6 ist.

8. Polymerisationsverfahren nach Anspruch 7, wobei der Druck zwischen 1 und 50 bar und die Temperatur zwischen 70° und 200° C gewählt werden, dadurch gekennzeichnet, daß die Polymerisation oder Copolymerisation in Gegenwart mindestens eines Lösungsmittels erfolgt, das ausgewählt ist aus der Gruppe bestehend aus den aliphatischen, alicyclischen und aromatischen Kohlenwasserstoffen und deren Halogenverbindungen.

9. Polymerisationsverfahren nach Anspruch 7, wobei der Druck zwischen 100 und 2500 bar und die Temperatur zwischen 170° und 320° C gewählt werden, dadurch gekennzeichnet, daß die Verweilzeit des Katalysatorsystems in dem (Co)polymerisationsreaktor je nach der gewählten Temperatur zwischen 2 und 120 s beträgt.